# FASCICULE DE BREVET EUROPEEN

(11) **EP 2 543 096 B1**
(45) Date de publication et mention de la délivrance du brevet: **19.02.2014**
(21) Numéro de dépôt: 11707592.9
(22) Date de dépôt: 02.03.2011
(51) Int. Cl.: H01M 2/34, H01M 10/42, G01R 15/20, H02H 7/18

(54) **BATTERIE ET ENSEMBLE EQUIPEMENT ELECTRIQUE ET BATTERIE D'ALIMENTATION DE L'EQUIPEMENT, AYANT DES PLOTS ACTIVABLES MAGNETIQUEMENT**
ANORDNUNG AUS EINER BATTERIE UND EINER ELEKTRISCHEN VORRICHTUNG SOWIE BATTERIE ZUM ANTREIBEN DER VORRICHTUNG MIT MAGNETISCH GESTEUERTEN ZAPFEN
BATTERY AND ELECTRIC APPARATUS ASSEMBLY AND BATTERY FOR POWERING THE APPARATUS, HAVING MAGNETICALLY CONTROLLED STUDS

(30) Priorité: 05.03.2010 FR 1051634
(43) Date de publication de la demande: 09.01.2013
(73) Titulaire: SAGEM DEFENSE SECURITE, 92100 Boulogne Billancourt (FR)
(72) Inventeur: NOLLET, Michel, F-75015 Paris (FR)
(74) Mandataire: Lavialle, Bruno François Stéphane
(86) Numéro de dépôt international: PCT/EP2011/001029
(87) Numéro de publication internationale: WO 2011/107270

(56) Documents cités:
- WO-A1-2006/080737
- GB-A- 2 279 802
- GB-A- 2 463 091
- US-A- 3 864 173

## Description

La présente invention concerne une batterie d'alimentation électrique et un ensemble équipement électrique et batterie d'alimentation de l'équipement. Par équipement électrique, on entend un équipement comportant au moins un composant fonctionnant à l'électricité tel qu'un composant électronique ou électrotechnique. Par batterie, on entend une pile primaire, c'est-à-dire non rechargeable, ou une pile secondaire, c'est-à-dire rechargeable, comportant un ou plusieurs éléments d'accumulation d'énergie électrique.

Il existe des batteries comportant un boîtier renfermant un ou plusieurs éléments d'accumulation d'énergie électrique, un connecteur de raccordement externe qui est relié par au moins deux conducteurs à chaque élément d'accumulation et qui débouche à l'extérieur du boîtier, et un circuit électronique qui est relié à chaque élément d'accumulation. Le circuit électronique assure la gestion du fonctionnement et de la sécurité de la batterie et peut fournir à l'équipement raccordé au connecteur et alimenté par la batterie des informations sur la batterie comme l'état de charge, la température... Le circuit électronique peut comporter un organe de détection de la présence d'un équipement électrique raccordé au connecteur.

WO2006080737 décrit une batterie comprenant un boîtier renfermant un détecteur de champ magnétique relié à un circuit de sécurité.

Le connecteur de raccordement comprend une pluralité de contacts (à broches, à pointes, à plots, etc) reliés à l'élément d'accumulation soit directement soit via le circuit électronique. Les plots sont généralement recouverts d'une fine couche d'or (de platine, d'argent ou d'un autre métal ou alliage résistant à la corrosion et ayant de bonnes propriétés pour réaliser un contact électrique) pour assurer une parfaite conduction électrique.

Comme tout générateur électrique, les batteries sont très sensibles aux liaisons qui peuvent être établies accidentellement entre deux plots. Trois types de liaison sont possibles.

Une liaison par un élément électriquement conducteur de faible résistance comme une clé métallique ou le revêtement métallisé d'un emballage qui risque d'établir un court-circuit entraînant notamment : la décharge de la batterie, un arc électrique et une perturbation électromagnétique au moment de son établissement ou de sa rupture, une perturbation chimique pour certains couples électrochimiques (Li-Io, LiSoCl₂, LiMnO₂) ou un fort échauffement des batteries de faibles résistances internes (batteries LI-Io, NiCd, NiMh, PbSO₄ par exemple). L'arc électrique peut engendrer une détérioration de la couche d'or ou bien encore amorcer un incendie ou une déflagration en atmosphère combustible ou déflagrante.

Une liaison par un élément électriquement conducteur de plus forte résistance constituant une charge dissipant la puissance de la batterie sous forme d'effet joule et entraînant ainsi une décharge de la batterie et un échauffement important qui peut être dangereux (risque de brûlure ou d'incendie par exemple).

Une liaison ionique résultant de la présence d'eau (ou d'un autre électrolyte) recouvrant deux plots. Il en résulte un déchargement de la batterie et une électrolyse détériorant la couche d'or (ou d'un autre métal tel que ceux mentionnés ci-dessus) altérant ainsi la qualité de conduction des plots.

Pour éviter une telle liaison accidentelle de deux plots, il est connu d'associer au connecteur un capuchon s'ajustant de manière étanche sur le connecteur. De tels capuchons doivent être ôtés avant la mise en place de la batterie, compliquant les manipulations nécessaires à sa mise en place, notamment avec des gants, et risquent d'être perdus.

On notera que la décharge par électrolyse et la détérioration qui en résulte ne concernent pas que les plots de puissance (reliés au pôle + et au pôle - de la batterie via l'interrupteur statique du circuit de sécurité) mais également les autres plots, dès lors qu'ils sont sous tension. La détérioration électrolytique concerne donc notamment, sur la batterie, les plots de son organe de détection de présence de l'équipement. La raison en est que la détection de présence de l'équipement doit être possible même en l'absence de tension fournie par l'équipement. Il faut donc que ce soit l'organe de détection de l'équipement qui envoie depuis la batterie un minimum de tension à l'équipement, afin de mesurer le courant occasionné par la présence de l'équipement ou d'obtenir une réponse de l'équipement. Donc, sur la batterie, les plots de l'organe de détection de l'équipement sont sous tension également.

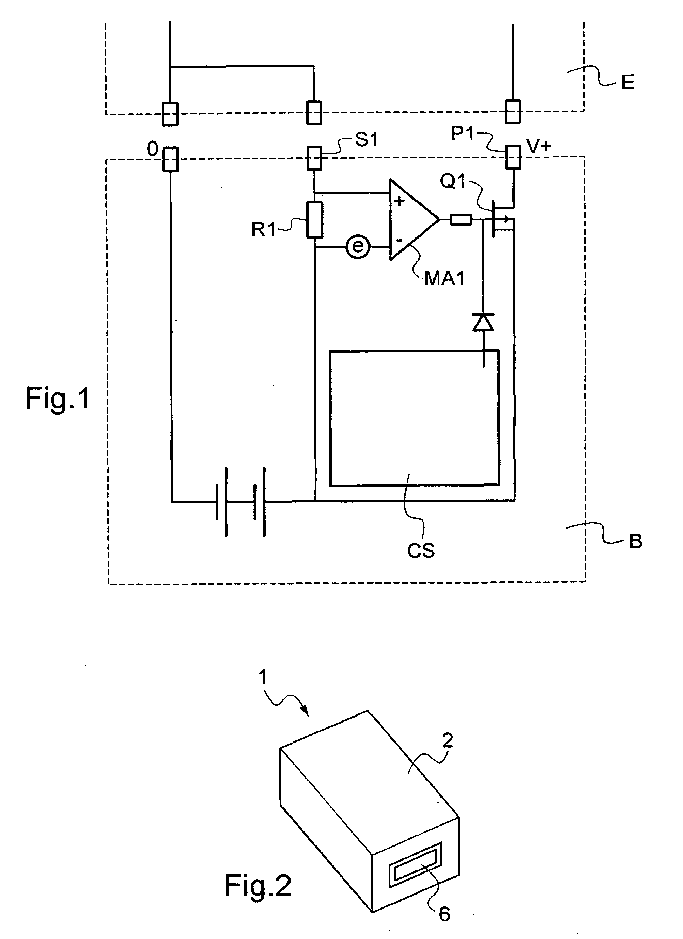

Une solution connue (voir la figure 1) consiste à réaliser la connexion d'au moins un plot de détection de présence S1, via une résistance interne R1 élevée afin de diminuer le courant d'électrolyse. Un comparateur MA1 branché aux bornes de la résistance commande un transistor Q1 reliant un des plots de puissance P1 à l'élément d'accumulation de la batterie B. Ce procédé a plusieurs inconvénients :
- il ne fait que ralentir la dégradation des plots puisqu'il diminue le courant d'électrolyse mais ne l'annule pas.
- il produit de fausses détections de présence d'équipements si son principe est la détection d'un courant passant par les plots correspondants de l'équipement E (fig. 1). En effet, la résistance interne étant élevée, la conduction par un peu d'eau ou d'humidité de surface, suffira à produire le courant de détection de l'équipement, même en l'absence d'équipement.

- il produira des lacunes de détection d'équipements si son principe est d'envoyer un signal électrique à l'équipement pour en attendre une réponse. En effet, la résistance interne étant élevée, la conduction par un peu d'eau ou d'humidité de surface, suffira à faire chuter la tension de sorte que l'équipement ne recevra pas suffisamment de signal pour envoyer sa réponse à la batterie.

Un but de l'invention est de fournir un moyen pour limiter le risque d'une décharge accidentelle de l'élément d'accumulation via une liaison électrique établie involontairement entre deux plots quelconques du connecteur.

A cet effet, on prévoit, selon l'invention, une batterie selon la revendication 1 comportant un boîtier renfermant au moins un élément d'accumulation d'énergie électrique, un connecteur de raccordement externe qui est relié par au moins deux conducteurs à l'élément d'accumulation et qui débouche à l'extérieur du boîtier, et un circuit électronique de sécurité qui est monté entre l'élément d'accumulation et le connecteur et qui possède un état inactivé de blocage du courant vers le connecteur et un état activé de passage du courant vers le connecteur. Le boîtier contient un détecteur de champs magnétique relié au circuit de sécurité pour activer celui-ci lorsqu'il détecte un champ magnétique.

Ainsi, en l'absence d'un champ magnétique auquel le détecteur serait soumis, l'élément d'accumulation est déconnecté de tous les plots du connecteur de la batterie, de sorte que l'établissement accidentel d'une liaison électrique entre deux plots quelconques du connecteur ne permet pas à lui seul une circulation de charges électriques entre les deux plots. Le raccordement de la batterie à l'équipement doit donc être réalisé lorsque le détecteur a été soumis à un champ magnétique. Le détecteur peut être disposé dans le boîtier de la batterie si ce boîtier est en matériau amagnétique ou alors si l'épaisseur du boîtier est suffisamment faible pour ne pas dévier une part trop importante des lignes de flux du champ magnétique eu égard à la sensibilité du détecteur. Dans le cas d'une batterie équipée d'un circuit de détection de l'équipement, la détection de l'équipement n'est pas utile en l'absence d'un champ magnétique auquel le détecteur serait soumis et l'élément d'accumulation est déconnecté de tous les plots du connecteur de la batterie, y compris ceux reliés au circuit de détection de l'équipement.

Selon un premier mode de réalisation, le détecteur de champ magnétique est un capteur à effet Hall.

Le capteur à effet Hall permet une détection fiable du champ magnétique, et son seuil de sensibilité est ajustable.

Selon un deuxième mode de réalisation, le détecteur de champ magnétique est un interrupteur à contact mobile magnétique.

Le champ magnétique commande alors la fermeture de l'interrupteur reliant ainsi le connecteur à l'élément d'accumulation, directement ou via une commande logique du circuit électronique de sécurité. La consommation de ce type d'interrupteur est nulle.

De préférence alors, le contact mobile est enfermé dans une capsule sous vide.

Le contact mobile n'est alors soumis ni à la résistance de l'air ni à l'oxydation. Ceci augmente la sensibilité et la fiabilité de l'interrupteur.

Selon l'invention, le circuit de sécurité comprend un élément de temporisation pour maintenir le circuit de sécurité dans son état activé pendant une durée prédéterminée après la détection du champ magnétique par le détecteur.

Le circuit de sécurité peut de la sorte être activé en soumettant le détecteur à un champ magnétique temporaire. Ceci permet de laisser du temps à l'utilisateur pour le raccordement de la batterie à l'équipement.

L'invention a également pour objet un ensemble équipement électrique et batterie d'alimentation électrique de l'équipement, l'équipement comportant un châssis comportant un logement pour la batterie et la batterie étant conforme à la définition générale ci-dessus, le logement comportant un aimant permanent ayant un champ magnétique détectable par le détecteur de champ magnétique de la batterie lorsque celle-ci est en position dans le logement.

La connexion de l'élément d'accumulation aux bornes de raccordement est ainsi automatique à l'insertion de la batterie dans son logement.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1, selon une solution connue, montre un équipement E et une batterie B de type connu dans laquelle le raccordement électrique de l'élément d'accumulation aux plots de puissance est effectué via un circuit de sécurité CS (dont l'organe de coupure est le transistor Q1) et la détection de présence de l'équipement est réalisée via la résistance R1 et le comparateur MA1 ;
- la figure 2 est une vue en perspective d'une batterie conforme à un premier mode de réalisation de l'invention ;

- la figure 3 est une vue schématique de cette batterie ;
- la figure 4 est une vue partielle en perspective d'un ensemble équipement et batterie conforme à l'invention,
- la figure 5 est une vue analogue à la figure 2 d'une batterie conforme à un deuxième mode de réalisation.

En référence aux figures, la batterie conforme à l'invention, généralement désignée en 1, est destinée à l'alimentation d'un équipement électrique 100 comportant un châssis 101 pourvu d'un logement 102 dans lequel débouche un connecteur 103.

La batterie 1 comprend un boîtier 2 renfermant un élément d'accumulation d'énergie électrique 3 relié par deux conducteurs 4, 5 à un connecteur 6 de raccordement externe qui est fixé dans une ouverture du boîtier 2 pour être accessible depuis l'extérieur du boîtier 2 et qui est agencé pour coopérer avec le connecteur 103.

Le boîtier 1 reçoit en outre un circuit électronique 7 qui est relié à l'élément d'accumulation 3 pour être alimenté par celui-ci et qui est relié au connecteur 6 pour envoyer des informations relatives à la batterie à un circuit correspondant de l'équipement 100. Le circuit électronique 7 comporte notamment un organe de mesure 8 de paramètres de fonctionnement de l'élément d'accumulation 3 (comme la température, le courant, la tension, l'état de charge) et un organe de détection 9 d'un équipement électrique raccordé au connecteur 6.

L'organe de détection 9 fonctionne par exemple en détectant sur deux plots du connecteur un signal de présence émis par le circuit de l'équipement 100.

Conformément au premier mode de réalisation et en référence aux figures 1 à 3, la batterie 1 comprend un circuit de sécurité qui comporte au moins un commutateur statique 13, ici un transistor bipolaire, monté sur le conducteur 4 et un détecteur de champ magnétique 15 relié au circuit électronique 7. Le détecteur de champ magnétique 15 est ici un capteur à effet Hall. Le circuit électronique 7 est agencé pour commander le commutateur 13 dans un état passant (correspondant à un état activé du circuit de sécurité) lorsque le détecteur de champ magnétique 14 est soumis à un champ magnétique et ensuite tant qu'un équipement électrique 100 est détecté aux bornes du connecteur 6. Le circuit électronique 7 comprend un élément de temporisation 14 pour maintenir le commutateur 13 dans l'état passant pendant une durée prédéterminée après l'activation du circuit de sécurité, la temporisation maintenant le commutateur 13 dans l'état passant pendant ladite durée même si le circuit de sécurité a été désactivé après la mise du commutateur 13 dans l'état passant.

Ainsi, lorsque l'utilisateur soumet le détecteur de champ magnétique 15 à un champ magnétique, par exemple au moyen d'un aimant, il dispose de la durée prédéterminée pour mettre en place la batterie 1 dans le logement 102. La mise en place correcte de la batterie dans le logement 102 entraîne la connexion du connecteur 6 au connecteur 103 et la détection de l'équipement 100 par l'organe de détection 9. Le circuit électronique 7 maintient alors le commutateur statique 13 dans son état passant tant que l'équipement 100 est détecté.

Lorsque la batterie 1 est ôtée de l'équipement 100 ou si l'utilisateur n'a pas mis en place la batterie 1 dans l'équipement 100, le circuit électronique 7 commande le commutateur statique 13 dans l'état bloqué et inhibe l'organe de détection 9 afin de supprimer toute tension sur le connecteur de la batterie.

Il est possible de prévoir dans le logement 102 un aimant permanent 104 (représentée en trait mixte double sur la figure 2) pour engendrer un champ magnétique susceptible d'être détecté par le détecteur de champ magnétique 15 à la mise en place de la batterie 1 dans le logement 102. Ceci permet de se prémunir contre un oubli de l'utilisateur omettant d'activer le circuit de sécurité avant la mise en place de la batterie 1 dans l'équipement 100.

Les éléments identiques ou analogues à ceux précédemment décrits porteront la même référence numérique dans la description qui suit du deuxième mode de réalisation.

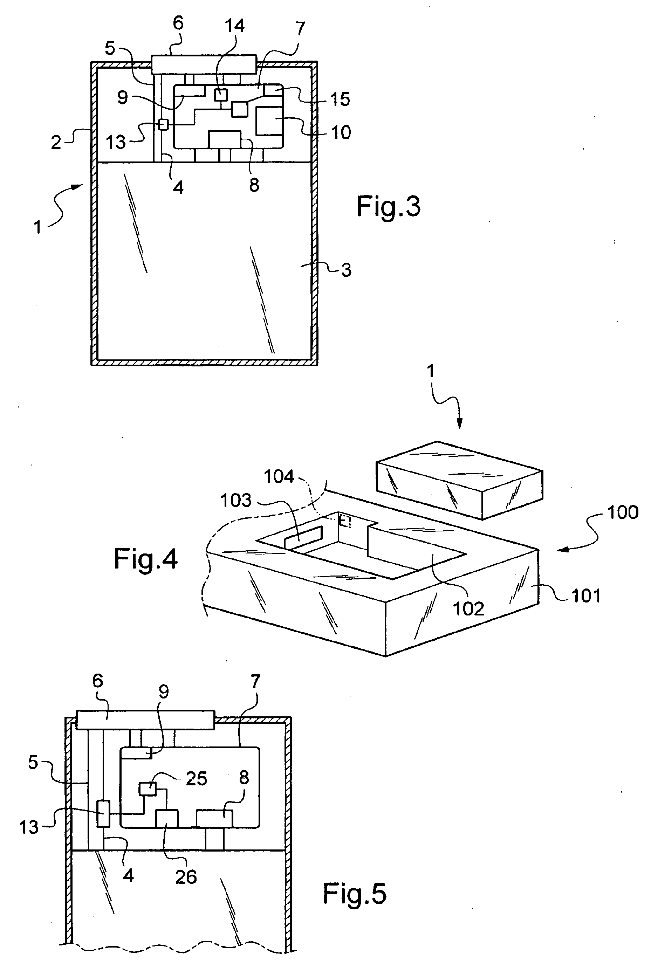

En référence à la figure 4, et conformément au deuxième mode de réalisation, la batterie 1 comprend un circuit de sécurité qui comporte au moins un commutateur statique 13, ici un transistor bipolaire, monté sur le conducteur 4 et un interrupteur à contact mobile 25 reliant une entrée de commande du commutateur statique 13 à un des éléments d'accumulation via un circuit d'adaptation 26 des caractéristiques du courant à la commande du commutateur statique 13. Le circuit en question est ici inclus dans le circuit de commande 7. Le contact mobile est en un matériau conducteur de flux magnétique agencé pour établir un contact électrique (position de connexion) lorsqu'il est soumis à un champ magnétique et pour rompre ce contact (position de déconnexion) lorsqu'il est hors du champ magnétique. Le contact mobile est ici enfermé dans une capsule sous vide comme les interrupteurs de type REED. L'interrupteur à contact mobile 25 constitue ainsi un détecteur de champ magnétique 15.

Ainsi, le commutateur statique 13 est commandé par l'interrupteur à contact mobile 25 dans un état passant (correspondant à un état activé du circuit de sécurité) lorsque l'interrupteur à contact mobile 25 est maintenu dans sa position de connexion par un champ magnétique auquel il est soumis et tant qu'un équipement électrique 100 est détecté aux bornes du connecteur 6. Le circuit électronique 7 comprend un élément de temporisation 14 pour maintenir le commutateur 13 dans l'état passant pendant une durée prédéterminée après l'activation du circuit de sécurité.

Ainsi, lorsque l'utilisateur soumet l'interrupteur à contact mobile 25 à un champ magnétique, par exemple au moyen d'un aimant, il dispose de la durée prédéterminée pour mettre en place la batterie 1 dans le logement 102. La mise en place correcte de la batterie dans le logement 102 entraîne la connexion du connecteur 6 au connecteur 103 et la détection de l'équipement 100 par l'organe de détection 9. Le circuit électronique 7 maintient alors le commutateur statique 13 dans son état passant tant que l'équipement 100 est détecté.

Les mêmes variantes que pour le premier mode de réalisation sont envisageables.

Ainsi, un aimant peut être fixé dans le logement de la batterie de l'équipement pour mettre et maintenir l'interrupteur à contact mobile 25 en position de connexion, rendant inutile le recours à une temporisation. Au surplus, il est possible de remplacer le commutateur 13 par l'interrupteur à contact mobile 25.

Bien entendu, l'invention n'est pas limitée aux modes de réalisations décrits mais englobe toute variante entrant dans le champ de l'invention telle que définie par les revendications.

En particulier, l'invention est applicable à des batteries et des équipements mettant en oeuvre d'autres modes de raccordement, et par exemple un raccordement via un câble ayant une extrémité libre en saillie du châssis de l'équipement et pourvue d'un connecteur.

La batterie peut avoir une structure différente de celle décrite et par exemple comprendre plusieurs éléments d'accumulation, être pourvue ou non d'un indicateur externe sonore et/ou pourvue ou non d'un indicateur de niveau de charge.

La batterie peut comporter un circuit de détection d'équipement relié au connecteur par le circuit électronique de sécurité de manière à être coupé du connecteur en l'absence d'un champ magnétique permettant l'activation du circuit de sécurité dans son état passant.

## Revendications

1. Batterie (1) comportant un boîtier (2) renfermant au moins un élément d'accumulation (3) d'énergie électrique, un connecteur de raccordement externe (6) qui est relié par au moins deux conducteurs (4, 5) à l'élément d'accumulation et qui débouche à l'extérieur du boîtier, et un circuit électronique de sécurité qui est monté entre l'élément d'accumulation et le connecteur et qui possède un état inactivé de blocage du courant vers le connecteur et un état activé de passage du courant vers les connecteur, **caractérisé en ce que** le boîtier contient un détecteur de champ magnétique (15, 25) relié au circuit de sécurité pour activer celui-ci lorsqu'il détecte un champ magnétique, le circuit de sécurité (7) comprenant un élément de temporisation (14) pour maintenir le circuit de sécurité dans son état activé pendant une durée prédéterminée après la détection du champ magnétique par le détecteur, et **en ce que** la batterie comporte un circuit de détection d'équipement relié au connecteur par le circuit électronique de sécurité de manière à être coupé du connecteur en l'absence du champ magnétique.

2. Batterie selon la revendication 1, dans laquelle le détecteur de champ magnétique (15) est un capteur à effet hall.

3. Batterie selon la revendication 1, dans laquelle le détecteur de champ magnétique (25) est un interrupteur à contact mobile magnétique.

4. Batterie selon la revendication 3, dans laquelle le contact mobile est enfermé dans une capsule sous vide.

5. Ensemble équipement électrique (100) et batterie (1) d'alimentation électrique de l'équipement, l'équipement comportant un châssis (101) comportant un logement (102) pour la batterie et la batterie étant conforme à la revendication 1, le logement comportant un aimant permanent (104) ayant un champ magnétique détectable par le détecteur de champ magnétique (15, 25) de la batterie lorsque celle-ci est en position dans le logement.

## Patentansprüche

1. Batterie (1), umfassend ein Gehäuse (2), das mindestens ein Speicherelement (3) zum Speichern elektrischer Energie umschließt, einen äußeren Verbindungsanschluss (6), der über mindestens zwei Leitungen (4, 5) mit dem Speicherelement verbunden ist und an der Außenseite des Gehäuses mündet, sowie einen elektronischen Schutzstromkreis, der zwischen dem Speicherelement und dem Anschluss geschaltet ist und einen inaktivierten Sperrzustand zum Sperren des Stroms in Richtung des Anschlusses und einen aktivierten Durchlasszustand zum Durchlass des Stroms in Richtung des Anschlusses aufweist, **dadurch gekennzeichnet, dass** das Gehäuse einen Magnetfelddetektor (15, 25) umfasst, der mit dem Schutzstromkreis verbunden ist, um diesen zu aktivieren, wenn er ein Magnetfeld detektiert, wobei der Schutzstromkreis (7) ein Zeitschaltelement (14) umfasst, um den Schutzstromkreis für eine vorgegebene Zeitdauer nach der Detektion des Magnetfeldes durch den Detektor in seinem aktivierten Zustand zu halten, und dass die Batterie eine Ausrüstungsdetektionsschaltung umfasst, die über den elektronischen Schutzstromkreis derart mit dem Anschluss verbunden ist, dass sie bei Nichtvorhandensein des Magnetfeldes von dem Anschluss abgetrennt wird.

2. Batterie nach Anspruch 1, wobei der Magnetfelddetektor (15) ein Hall-Effekt-Sensor ist.

3. Batterie nach Anspruch 1, wobei der Magnetfelddetektor (25) ein Magnetschalter mit beweglichem Kontakt ist.

4. Batterie nach Anspruch 3, wobei der bewegliche Kontakt in einer Vakuumkapsel eingeschlossen ist.

5. Einheit aus elektrischer Ausrüstung (100) und Batterie (1) zur elektrischen Versorgung der Ausrüstung, wobei die Ausrüstung einen Rahmen (101) umfasst, der eine Aufnahme (102) für die Batterie umfasst, und die Batterie gemäß Anspruch 1 ausgebildet ist, wobei die Aufnahme einen Dauermagneten (104) mit einem Magnetfeld umfasst, das von dem Magnetfelddetektor (15, 25) der Batterie detektierbar ist, wenn diese in Position in der Aufnahme ist.

## Claims

1. A battery (1) comprising a housing (2) containing at least one electrical energy storage element (3), an external connection connector (6) that is connected by at least two conductors (4, 5) to the storage element and that leads to the outside of the housing, and an electronic safety circuit that is arranged between the storage element and the connector and that possesses an inactivated state blocking the passage of electricity to the connector and an activated state allowing electricity to pass to the connector, the battery being **characterized in that** the housing contains a magnetic field detector (15, 25) connected to the safety circuit in order to activate it when it detects a magnetic field, the safety circuit (7) including a timer element (14) for keeping the safety circuit in its activated state for a predetermined duration after the detector has detected the magnetic field, and **in that** the battery includes a circuit for detecting equipment connected to the connector by the electronic safety circuit so as to be disconnected from the connector in the absence of the magnetic field.

2. A battery according to claim 1, wherein the magnetic field detector (15) is a Hall effect sensor.

3. A battery according to claim 1, wherein the magnetic field detector (25) is a switch having a magnetic movable contact.

4. A battery according to claim 3, wherein the movable contact is enclosed in a vacuum capsule.

5. An assembly of electrical equipment (100) and a battery (1) for electrically powering the equipment, the equipment comprising a structure (101) including a slot (102) for receiving the battery and the battery being in accordance with claim 1, the slot including a permanent magnet (104) producing a magnetic field detectable by the magnetic field detector (15, 25) of the battery when the battery is in position in the slot.
